# EUROPÄISCHE PATENTSCHRIFT

(11) **EP 1 467 888 B1**
(45) Veröffentlichungstag und Bekanntmachung des Hinweises auf die Patenterteilung: **29.04.2009**
(21) Anmeldenummer: 02776692.2
(22) Anmeldetag: 07.10.2002
(51) Int. Cl.: B60K 31/04

(54) **VERFAHREN UND VORRICHTUNG ZUR STEUERUNG DER FAHRGESCHWINDIGKEIT EINES FAHRZEUGS**
METHOD AND DEVICE FOR CONTROLLING THE TRAVELLING SPEED OF A VEHICLE
PROCEDE ET DISPOSITIF POUR COMMANDER LA VITESSE DE DEPLACEMENT D'UN VEHICULE

(30) Priorität: 15.01.2002 DE 10201160
(43) Veröffentlichungstag der Anmeldung: 20.10.2004
(73) Patentinhaber: ROBERT BOSCH GMBH, 70442 Stuttgart (DE)
(72) Erfinder: KUSTOSCH, Mario, 71706 Markgroeningen (DE)
(86) Internationale Anmeldenummer: PCT/DE2002/003539
(87) Internationale Veröffentlichungsnummer: WO 2003/059677

(56) Entgegenhaltungen:
- DE-A- 19 509 492
- DE-A- 19 509 494
- DE-A- 19 654 769
- DE-A- 19 821 803

## Beschreibung

### Stand der Technik

Die Erfindung betrifft ein Verfahren und eine Vorrichtung zur Steuerung der Fahrgeschwindigkeit eines Fahrzeugs.

Aus der EP 507 072 B1 (US-Patent 5,351,776) ist ein elektronisches Steuersystem für ein Fahrzeug bekannt, bei welchem abhängig vom Fahrerwunsch und von Sollwerten aus Fahrerassistenzsystemen ein Sollbeschleunigungswert für die Längsbewegung des Fahrzeugs abgeleitet wird, welcher durch Steuerung des Antriebstrangs bzw. der Bremsanlage des Fahrzeugs eingestellt wird. Konkrete Angaben zur Koordination mehrerer, von unabhängigen Systemen ermittelten Sollbeschleunigungswerten, werden nicht angegeben.

Aus der deutschen Patentanmeldung 100 48 015 vom 26.09.2000 ist ein Steuersystem für eine Antriebseinheit bekannt, bei welchem ausgehend von Getriebeausgangs- oder Abtriebssolldrehmomentenwerten verschiedener Steuersysteme ein resultierender Sollmomentenwert zur Steuerung der Antriebseinheit erzeugt wird, der durch entsprechende Umsetzung in Stellgrößen der Antriebseinheit realisiert wird.

Beispielsweise aus der DE-A 196 16 732 (US-Patent 6,208,926) ist bekannt, ausgehend von einem Sollverzögerungswert, der vom Fahrer durch Betätigen des Bremspedals oder von Fahrerassistenzsystemen, wie beispielsweise einem adaptiven Fahrgeschwindigkeitsreglers, stammt, in ein Sollbremsmoment umzusetzen, welches durch Betätigen der Bremsanlage des Fahrzeugs realisiert wird.

Aus dem SAE-Paper Nr. 96 10 10 "Adaptive Cruise Control, System Aspects and Development Trends", 1996, von Hermann Winner, Stefan Witte, Werner Uhler und Bernd Lichtenberg ist ein adaptiver Fahrgeschwindigkeitsregler (Fahrgeschwindigkeitsregler mit Abstandsmessung) bekannt.

Aus der DE 195 09 492 A1 ist ein Verfahren und eine Vorrichtung gemäß dem Oberbegriff der unabhängigen Ansprüche zur Geschwindigkeitsbegrenzung eines Kraftfahrzeuges bekannt, bei der ein Verfahren vorgesehen ist, das auch dann schon motormomentbegrenzend eingreift, wenn die Istgeschwindigkeit noch unterhalb der Höchstgeschwindigkeit liegt, jedoch eine über letzterer liegende, fahrerangeforderte Geschwindigkeit erkannt wird. Dabei erfolgt zunächst ein beschleunigungsregelnder und bei weiterer Annäherung an die Höchstgeschwindigkeit ein geschwindigkeitsregelnder Systemeingriff, so daß die Istgeschwindigkeit weich an die eingestellte Höchstgeschwindigkeit herangeführt werden kann. Bei fahrerangeforderten Geschwindigkeiten unterhalb der Höchstgeschwindigkeit bleibt das Fahrverhalten allein vom Fahrer bestimmt. Die Geschwindigkeitsbegrenzung kann vorteilhafter Weise mit einer Tempomatregelung bei wahlweiser Aktivierung einer der beiden Betriebsarten kombiniert sein.

Aus der DE 198 21 803 A1 ist ein Verfahren und eine Vorrichtung zur Steuerung der Längsgeschwindigkeit eines Kraftfahrzeuges mit laufender Ermittlung der Fahrzeugposition und Steuerung der Längsgeschwindigkeit unter Vorgabe eines Geschwindigkeitsvorgabesollwertes und/oder Geschwindigkeitsvorgabegrenzwertes in Abhängigkeit von der ermittelten Fahrzeugposition bekannt. Erfindungsgemäß werden durch entsprechende Geschwindigkeitsvorgabemittel Geschwindigkeitsdaten über den Istwert und/oder einen eingestellten Sollwert und/oder einen eingestellten Grenzwert der Fahrzeuglängsgeschwindigkeit in Abhängigkeit von der Fahrzeugposition erfaßt, und der Geschwindigkeitsvorgabesollwert und/oder Geschwindigkeitsvorgabegrenzwert wird aus den für die jeweilige Fahrzeugposition während einer oder mehrerer vorheriger Fahrten erfassten Geschwindigkeitsdaten ermittelt, wobei die erfassten Geschwindigkeitsdaten.selbst und/oder die Vorgabesollwert- bzw. Vorgabegrenzwertdaten abrufbar abgespeichert werden.

Aus der DE 195 09 494 A1 ist eine Vorrichtung zur Regulierung der Geschwindigkeit eines Kraftfahrzeuges bekannt, bei der eine Tempomatfunktionsbaugruppe zur Erfüllung einer Tempomatfunktion sowie eine Begrenzungsfunktionsbaugruppe zur Begrenzung der Geschwindigkeit auf eine variabel vorgebbare Grenzgeschwindigkeit vorgesehen sind, die einen Bereich erlaubter Geschwindigkeiten von einem Bereich zu vermeidender Geschwindigkeiten trennt. Zur komfortablen und funktionssicheren Bedienung besitzt die Vorrichtung eine Bedieneinrichtung zur wahlweisen Aktivierung der einen oder der anderen Funktionsbaugruppe mit gleichzeitiger Deaktivierung der jeweils anderen Baugruppe sowie zur Einstellung des Sollgeschwindigkeitswerts im Tempomatbetrieb bzw. eines beliebigen Grenzgeschwindigkeitswertes im Begrenzungsbetrieb.

### Vorteile der Erfindung

Durch die Merkmalskombination der unabhängigen Ansprüche wird ein paralleler Betrieb von Geschwindigkeitsregelfunktionen und Geschwindigkeitsbegrenzungsfunktionen erlaubt. In vorteilhafter Weise wird dadurch die Verbindung von Funktionen unterschiedlicher Art und/oder Herkunft (unterschiedlicher Hersteller) und/oder verschiedener Produkte (z. B. Verwendung desselben Geschwindigkeitsbegrenzers mit einem adaptiven Fahrgeschwindigkeitsregler und einem üblichen Tempomaten) möglich.

Dabei wird ferner die gleichzeitige Nutzung von Geschwindigkeitsregel- und Begrenzungsfunktion ermöglicht. Die alternative Auswahl der Funktionen und damit teuere Bedienelemente entfallen. Dadurch steigt der Benutzungskomfort und/oder die Bedienfreundlichkeit des Systems.

Durch die beschriebene Koordination wird ferner eine modulare Anbindung weiterer Anwendungen, die auf die Fahrzeug Längsbewegung, wie z.B. eine Kurvengeschwindigkeitsbegrenzung, einwirken, ermöglicht.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsbild einer Steuereinrichtung, welche die nachfolgend beschriebene Maßnahme zur konfliktfreien Koexistenz verschiedener, die Fahrgeschwindigkeit beeinflussender Funktionen erlaubt. In den Figuren 2 bis 5 sind anhand von Diagrammen ein Ausführungsbeispiel für Maßnahmen zur konfliktfreien Koexistenz mehrerer Fahrgeschwindigkeitssteuerfunktionen dargestellt. Figur 6 zeigt ein Ablaufdiagramm der Verteilereinrichtung.

### Beschreibung von Ausführungsbeispielen

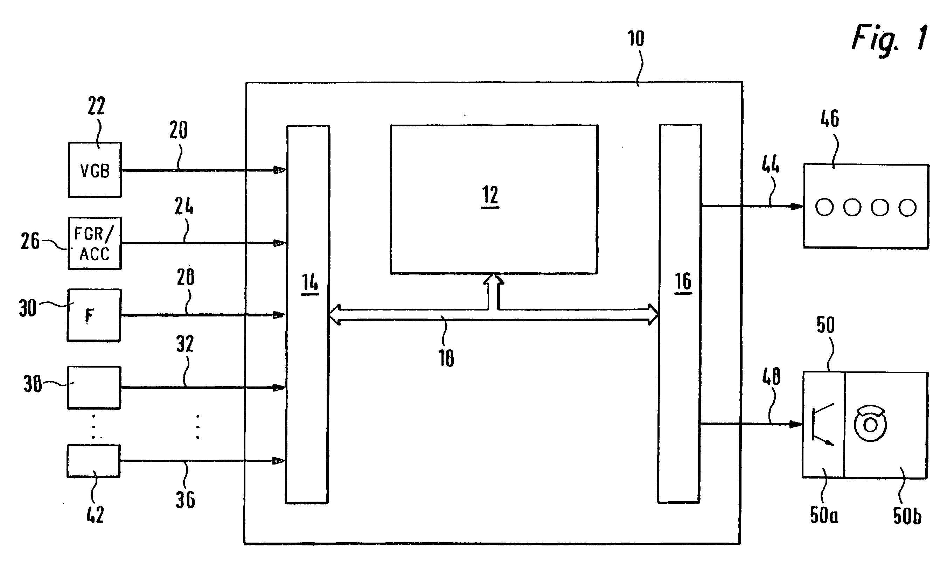

Figur 1 zeigt eine elektronische Steuereinheit 10, die je nach Ausführungsbeispiel eine Steuereinheit zur Motorsteuerung, zur Getriebesteuerung, zur Bremsensteuerung, eine zentrale Steuereinheit eines Fahrzeugsteuersystems oder eine andere Steuereinheit sein kann. Im dargestellten bevorzugten Ausführungsbeispiel handelt es sich bei der Steuereinheit 10 um eine Steuereinheit zur Steuerung des Antriebsmotors, wobei die Steuereinheit aus Mikrocomputer samt Speicher 12, Eingangschaltung 14 und Ausgangschaltung 16 besteht. Diese Elemente sind mit einem Kommunikationssystem 18 miteinander zum Datenaustausch verbunden. An die Eingangsschaltung 14 sind Eingangsleitungen angebunden, die die Steuereinheit 10 mit anderen Steuersystemen, die auf die Längsbewegung des Fahrzeugs Einfluss nehmen, und mit Messeinrichtungen zur Erfassung von Betriebsgrößen des Fahrzeugs, der Antriebseinheit, des Triebstrangs oder der Bremsanlage verbinden. Demnach verbindet eine erste Eingangsleitung 20 die Steuereinheit 10 mit einem Fahrgeschwindigkeitsbegrenzer (VGB) 22 und eine zweite Eingangsleitung 24 mit einem Fahrgeschwindigkeitsregler (FGR) bzw. einem adaptiven Fahrgeschwindigkeitsregler (ACC) 26. Über eine Eingangsleitung 28 wird der Steuereinheit 10 von einer Messeinrichtung 30 wenigstens eine Größe, die die Stellung eines vom Fahrer betätigbaren Bedienelements repräsentiert, zugeführt. Dieses Bedienelement ist beispielsweise ein Fahrpedal. Ferner sind Eingangsleitungen 32 bis 36 vorgesehen, die die Steuereinheit 10 mit Messeinrichtungen 38 bis 42 verbinden. Diese Messeinrichtungen ermitteln Signale, die weitere Betriebsgrößen des Fahrzeugs, des Antriebs oder der Bremsanlage repräsentieren. Als Beispiel seien hier genannt Motordrehzahl, Motortemperatur, der Status von Nebenverbrauchern, die nicht zum Antrieb des Fahrzeugs beitragen, das Übersetzungsverhältnis im Triebstrang, etc.

Über Ausgangsleitungen 44, die von der Ausgangsschaltung 16 der Steuereinheit 10 wegführen, wird die Antriebseinheit 46 des Fahrzeugs mittels Stellgrößen für Leistungsparameter gesteuert. Ferner ist über eine Verbindungsleitung 48 eine Verbindung zu einem Bremsensteuersystem 50 vorgesehen, über die ein Verzögerungswunsch an die Steuereinheit 50a des Bremsensystems ausgegeben wird, welche die Bremsanlage 50b des Fahrzeugs betätigt. Ein solches Bremsensteuersystem 50 ist beispielsweise ein bekanntes elektrohydraulisches Bremssystem.

Im dargestellten Ausführungsbeispiel sind die nachfolgend beschriebenen Maßnahmen zur konfliktfreien Koexistenz der Geschwindigkeitssteuersysteme Teil der Steuereinheit 10, welche Stellgrößen zur Steuerung der Antriebseinheit 46 des Fahrzeugs bereitstellt. In anderen Ausführungsbeispielen ist dieser Koordinator Teil der Steuereinheit 50a des Bremssystems, wobei dann ein entsprechendes Steuersignal an eine Steuereinheit zur Steuerung der Antriebseinheit des Fahrzeugs ausgegeben wird. In wieder anderen Ausführungsbeispielen ist die Steuereinheit 10 eine zentrale Steuereinheit oder eine Steuereinheit eines Assistenzsystems, welche die Stellsignale für die Bremsensteuersysteme bzw. die Antriebssteuersysteme ermittelt. Die Antriebseinheit 46 ist dabei je nach Ausführungsbeispiel ein Verbrennungsmotor oder ein E-elektromotor.

Ferner ist in Figur 1 der Fahrgeschwindigkeitsbegrenzer 22 bzw. der Fahrgeschwindigkeitsregler 26 als separate Steuereinheiten dargestellt, die zur Ausführung ihrer Funktion jeweils eigene Mikrocomputer umfassen. In anderen Ausführungsbeispielen sind die beschriebenen Funktionen Programme des Mikrocomputers 12, wobei dann über die Eingangsleitungen lediglich Betätigungssignale des Fahrers und Messignale bezüglich Fahrzeuggeschwindigkeit und Abstand übermittelt werden, während die Beschleunigungssollwerte dieser Steuersysteme im Mikrocomputer 12 intern vorliegen.

Über die Eingangsleitung 28 erhält die Steuereinheit 10 eine Größe, die die Stellung eines vom Fahrer betätigbaren Bedienelements, beispielsweise eines Fahrpedals, übermittelt. Aus diesem wird, wie beispielsweise im eingangsgenannten Stand der Technik ausgeführt, ein Sollmomentenwert abgeleitet, der unter Verknüpfung mit anderen Sollmomentenwerten in die Stellgrößen zur Steuerung der Antriebseinheit umgesetzt wird. Der adaptive Fahrgeschwindigkeitsregler 26 erzeugt Beschleunigungssollsignale auch Vorgabegrößen genannt. Ein Beispiel für eine solche Vorgehensweise ist aus dem eingangsgenannten Stand der Technik bekannt. Er übermittelt die Sollbeschleunigung an die Steuereinheit 10. Entsprechende Sollsignale bildet der beispielhaft dargestellte Fahrgeschwindigkeitsbegrenzer 22.

Wie oben erwähnt sind Nebenfunktionen.zur Regelung einer vorgegebenen Geschwindigkeit (Fahrgeschwindigkeitsregler oder Tempomat FGR) oder der Distanz (z. B. Adaptive Cruise Control, ACC) zunehmend auch Funktionen zur Begrenzung auf eine vorgegebenen obere Geschwindigkeitsschwelle (Geschwindigkeitsbegrenzungsfunktionen) gefragt. Anwendungsbeispiele für solche Begrenzungsfunktionen sind die Beschränkung auf eine vom Fahrer vorgegebene obere Geschwindigkeit, die Beschränkung der Geschwindigkeit bei Kurvenfahrt oder bei Erkennung einer Überschreibung des zulässigen Höchstgewichts, bei Druckverlust im Reifen, etc.. Ist gleichzeitig ein Geschwindigkeitsregler und ein Geschwindigkeitsbegrenzer aktiv, können Konflikte auftreten. Regelt beispielsweise der Geschwindigkeitsregler auf 80 km/h, liegt aber eine Geschwindigkeitsbegrenzung von 50 km/h vor, würden die beiden Regler gegeneinander arbeiten und eventuell vorhandene Integratoren würden große Werte annehmen. Dadurch wird der Fahrkomfort, beispielsweise durch Schwingungen in Mitleidenschaft gezogen.

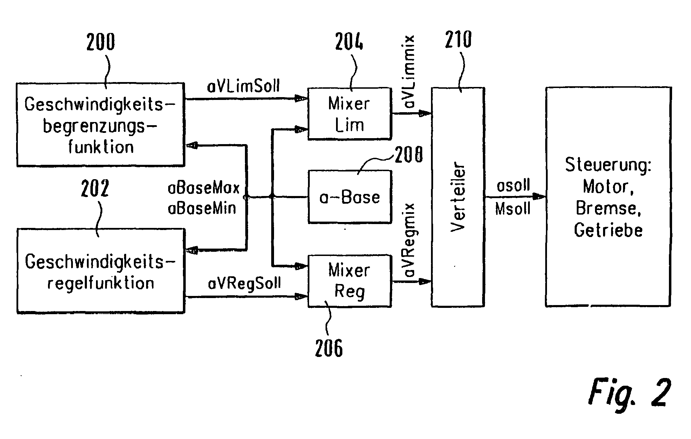

Das in Figur 2 skizzierte Ablaufdiagramm, welches das Programm eines Mikrocomputer einer der oben erwähnten Steuereinheiten repräsentiert, zeigt Maßnahmen, die wirksam den oben skizzierten Konflikt verhindern. Als Geschwindigkeitsregelfunktion wird in diesem Zusammenhang eine Funktion verstanden, die den Vortrieb des Fahrzeugs in Längsrichtung fordert. Diesen sowohl positiv als auch negativ beeinflußt. Beispiele hierfür sind adaptive Fahrgeschwindigkeitsregler, Tempomaten sowie Stop-And-Roll-Regler. Geschwindigkeitsbegrenzungsfunktionen sind Funktionen, die eine Begrenzung des Vortriebs in Längsrichtung des Fahrzeugs fordern und diesen Vortrieb daher nur negativ beeinflussen. Beispiele sind die Fahrgeschwindigkeitsbegrenzer mit Vorgabe vom Fahrer, Kurvengeschwindigkeitsbegrenzer, etc..

Im Ablaufdiagramm der Figur 2 ist eine Geschwindigkeitsbegrenzungsfunktion 200 sowie eine Geschwindigkeitsregelfunktion 202 dargestellt. Die Ausgestaltung derartiger Funktionen ist beispielsweise aus dem eingangs genannten Stand der Technik bekannt. Die Funktionen entfalten dabei wenigstens eine der oben genannten Wirkungen, in einigen Ausführungsbeispielen mehrere davon (beispielsweise kann die Begrenzerfunktion eine Kurvenbegrenzung, eine Druckverlustbegrenzung und eine vom Fahrer vorgegebene Begrenzung umfassen). Entsprechend dem eingangs genannten Stand der Technik bilden die jeweiligen Funktionen Stellgrößen aVLimSoll bzw. aVRegsoll, die die Funktionen zur Weiterverarbeitung abgeben. Im Ausführungsbeispiel handelt es sich dabei um Vorgabegrößen für die Beschleunigung bzw. Verzögerung des Fahrzeugs. In anderen Ausführungsbeispielen handelt es sich bei diesen Sollgrößen um Sollmomentengrößen, etc.. Die Vorgabegrößen werden jeweils an einen der jeweiligen Funktion zugeordneten Mixer 204 bzw. 206 übermittelt. Dabei ist für die Geschwindigkeitsbegrenzungsfunktion der Mixer (LIM) 204, für die Geschwindigkeitsregelfunktion der Mixer (REG) 206 zuständig. Die Mixer haben die Aufgabe, die jeweilige Vorgabegröße (Beschleunigungswunsch) zu begrenzen. Dies erfolgt in Abhängigkeit der in der 208 gebildeten Basiswerten aBase.

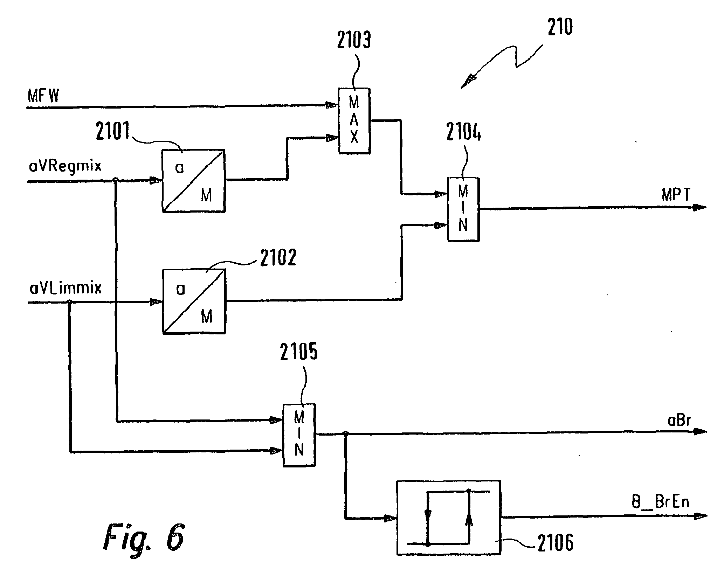

Die Bildung dieser Werte wird nachfolgend ebenso wie die Funktionsweise der Mixer im Detail beschrieben. Das Ergebnis der Begrenzung durch die Mixer sind gegebenenfalls begrenzte Vorgabegrößen. Diese sind im Falle der Geschwindigkeitsbegrenzungsfunktion als Ausgangsgröße des Mixers 204 als aVLimmix, im Falle der Geschwindigkeitsregelfunktion als Ausgangsgröße des Mixers 206 als aVRegmix bezeichnet. Diese gegebenenfalls begrenzten Vorgabegrößen werden dann in einem Verteiler 210 koordiniert. Der Verteiler trifft eine Auswahl unter diesen zugeführten begrenzten Vorgabegrößen und bildet einen oder mehrere Vortriebssollwerte, der an die entsprechenden Steuerungsfunktionen für Motor, Bremse und/oder Getriebe abgegeben wird. Ein bevorzugtes Ausführungsbeispiel eines solchen Verteilers zeigt Figur 6.

In 208 werden die Beschleunigungsbasiswerte gebildet. Im bevorzugten Ausführungsbeispiel wird ein erster Basiswert aBaseMax gebildet, der derjenige Wert ist, den eine Sollbeschleunigung mindestens überschreiten muß, damit eine tatsächliche positive Beschleunigung am Fahrzeug auftritt, während als zweiter Wert ein Wert aBaseMin ermittelt wird, der derjenige Wert ist, den eine Sollbeschleunigung mindestens unterschreiten muß, damit eine negative Beschleunigung am Fahrzeug auftritt. Diese Basiswerte werden den Mixern 204 und 206 sowie dem Geschwindigkeitsregel- bzw. Geschwindigkeitsbegrenzungsfunktionen übermittelt. Die Basiswerte erfüllen dabei mehrere Funktionen. Zum einen dienen sie den Geschwindigkeitsregelfunktionen und den Begrenzungsfunktionen als Richtgrößen zur Begrenzung der Vorgabegrößen, von Integratoren und/oder zum Initialisieren. So werden z.B. die Vorgabegrößen auf den jeweiligen Basiswert begrenzt, da sie nur bei größeren Werten Wirkung entfalten und die Integratoren auf diesen Basiswert gesetzt.

Ferner verhindern sie das Übertreten physikalisch unmöglicher Bereiche, z. B. des maximalen Motormoments oder des maximalen Bremsdrucks.

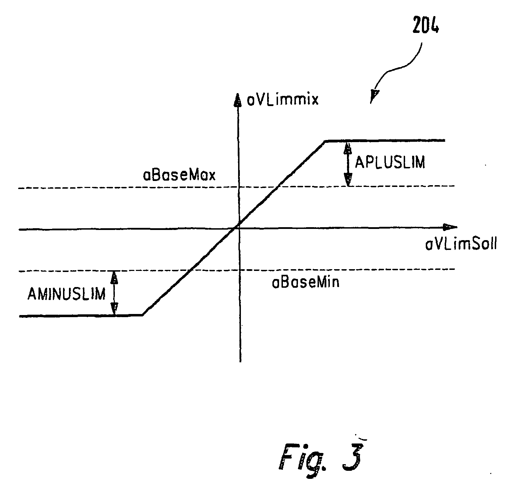

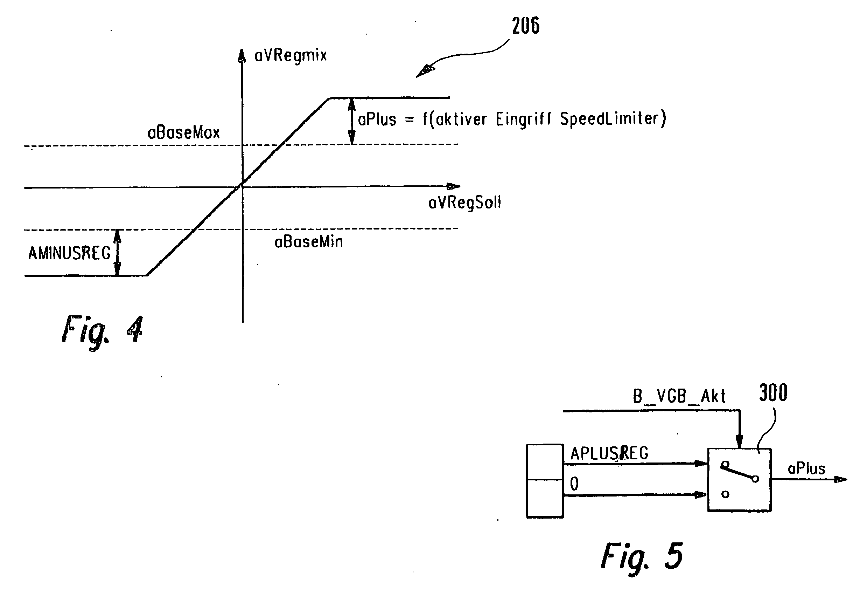

Als dritte Wirkung dienen sie als Hysteresewerte für eine Ruckbegrenzung und sind somit dem Fahrkomfort förderlich. Die Basiswerte werden wie in Figur 2 dargestellt den Fahrfunktionen mitgeteilt. Diese verwenden die Basiswerte, um eine Begrenzung ihrer Vorgabegrößen aVRegMix bzw. aVLimMix nach Figur 3 bzw. 4 durchzuführen. Dadurch wird ein Über- bzw. Unterschreiten der Basiswerte nur um einen vorgegebenen Betrag erlaubt. Dieser Betrag ist applizierbar und so gewählt, dass keine unangenehmen Sprünge in den Sollwertsignalen auftreten.

Die Basiswerte sind vorgegeben und insbesondere von der Ist-Beschleunigung bzw. Verzögerung des Fahrzeugs abhängig. Im Ausführungsbeispiel werden die Basiswerte aus Kennlinien abgeleitet.

In einem bevorzugten Ausführungsbeispiel werden die Basiswerte wie folgt ermittelt. Vorausgesetzt, dass eine Geschwindigkeitsregelfunktion aktiv ist, wird aBaseMAx auf der Basis des alten Beschleunigungssollwerts aVRegmix(n-1) und der aktuellen Fahrzeugistbeschleunigung aBaseAct berechnet. Dabei entspricht aBaseMax in der Regel bei einem positiven Gradienten der Vorgabegröße dem Sollwert, bei einem negativen Gradienten dem Istbeschleunigungswert. Dabei ist darauf zu achten, dass aBaseMax den aktuellen Beschleunigungswert nicht um mehr als einen applizierbaren Wert (z.B.- 0,7m/sec) überschreitet. Damit wird verhindert, dass sich aBaseMax durch Anbindung an den alten Sollwert zu weit vom Istwert entfernt.

Entsprechend wird aBaseMin auf der Basis des alten Beschleunigungssollwerts und dem aktuellen Beschleunigungswert berechnet. aBaseMin entspricht dabei in der Regel bei negativem Sollwertgradienten dem Sollwert, bei positivem dem Istwert. Auch hier darf aBaseMin den Istwert nicht um mehr ein einem applizierbaren Wert (z.B. 0,7 m/sec) unterschreiten.. Damit wird verhindert, dass sich aBaseMin durch Anbindung an den alten Sollwert zu weit vom Istwert entfernt.

In Figur 3 ist anhand eines Diagramms die Wirkungsweise des Mixers 204 beschrieben. Figur 3 zeigt eine Kennlinie, die zur Umsetzung der zugeführten Vorgabegröße aVLimSoll in die begrenzte Vorgabegröße aVLimMix dient. Dabei ist die Ausgangsgröße aVLimMix über der Eingangsgröße aVLimSoll aufgetragen. Die Kennlinie beschreibt dabei im Wesentlichen eine Ursprungsgerade, die begrenzt ist. Die obere Grenzlinie wird durch den Wert (aBaseMax + aPlusLim) gebildet, die untere durch (aBaseMin - aMinusLim). Dabei sind die Größen aPlusLim und aMinusLim fest vorgegebene Größen. Es entsteht somit eine Kennlinie, die den Beschleunigungswunsch oberhalb eines bestimmten Beschleunigungswunsches auf einen festen Maximalwert bzw. Minimalwert begrenzt. Eine positive wie auch eine negative Veränderung der Ausgangsgröße aVLimMix ist so außerhalb der Grenzwerte jederzeit möglich. Eine Änderung der Sollgröße über die Basiswerte hinaus ist ebenfalls jederzeit möglich.

Figur 4 zeigt ein Ausführungsbeispiel für den Mixer 206. Auch dieser stellt eine begrenzte Kennlinie, vorzugsweise eine Ursprungsgerade, dar. Auch hier ist die Ausgangsgröße aVRegMix über der Eingangsgröße aVRegSoll aufgetragen. Eingangsgröße des Mixers 206 ist die Sollgröße aVRegSoll. Die obere Begrenzungsgröße wird durch den Basiswert aBaseMax zuzüglich eine Größe aPlus gebildet, die untere durch den Basiswert aBaseMin, vom dem ein fest vorgegebener Wert aMinus-Reg abgezogen ist. Die Größe aPlus ist veränderlich. Sie ist abhängig davon, ob ein aktiver Eingriff des Fahrgeschwindigkeitsbegrenzers vorliegt. Ein aktiver Eingriff des Fahrgeschwindigkeitsbegrenzers ist immer dann gegeben, wenn das Fahrzeug unter dessen Wirkung verzögert wird oder wenn andere Vorgabegrößen, z. B. vom Fahrpedal, durch diesen begrenzt werden. Bei aktivem Eingriff durch den Fahrgeschwindigkeitsbegrenzer wird die obere Grenze durch aBaseMax vorgegeben. Dadurch kann die Geschwindigkeitsregelfunktion in diesem Fall nicht zu einer positiven Beschleunigungsänderung beitragen. Somit wird verhindert, dass sie gegen den Fahrgeschwindigkeitsbegrenzer arbeitet. Eine negative Beschleunigungsänderung durch die Geschwindigkeitsregelfunktion ist unkritisch und deshalb auch jederzeit möglich. Der Mixer 206 bildet also eine Art Ventil, das bei aktivem Eingriff durch den Fahrgeschwindigkeitsbegrenzer den Beschleunigungswunsch des Geschwindigkeitsreglers nach oben begrenzt.

Die Bildung des Faktors aPlus ist anhand des Ablaufdiagramms der Figur 5 skizziert. Der Wert aPlus ist Ausgangsgröße eines Schaltelements 300. Dieses ist bei nicht aktivem Eingriff des Begrenzers in der gezeigten Stellung. Dies bedeutet, dass die fest vorgegebene Größe aPlusReg als aPlus-Wert weitergegeben wird. Bei einem aktiven Eingriff des Geschwindigkeitsbegrenzers (B_VGB_Akt = 1) schaltet das Schaltelement 300 in die nicht gezeigte Stellung um, so dass als aPlus-Wert der Wert 0 weitergegeben wird. Das Schaltsignal B_VGB_Akt wird gebildet, wenn eine Verzögerung durch den Begrenzer erkannt wurde (aSollLim < aBaseMin) oder wenn eine Begrenzung des aus dem Fahrpedal abgeleiteten Fahrerwunsches durch die Ausgangsgröße des Begrenzers vorliegt.

Figur 6 zeigt ein Ablaufdiagramm, welches eine bevorzugte Realisierung des Verteilers 210 unter Berücksichtigung des Fahrerwunschmoments MFW skizziert. Eingangsgrößen sind neben den Sollwerte aVRegMix und aVLimMix das Fahrerwunschmoment MFW, welches aus dem Fahrpedalwert ermittelt wird. Die Ausgangsgröße MPT ist der resultierende Wunsch nach Vortriebsmoment aus den Fahrfunktionen und dem Fahrerwunsch. Die Größe aBr bezeichnet die resultierende Wunschverzögerung, die sich aus den Fahrfunktionen ergibt. Die binäre Information B_BrEn repräsentiert die Gültigkeit von aBr. In 2101 und 2102 werden mit Hilfe der fahrdynamischen Gleichung die Beschleunigungssollwerte aVRegMix und aVLimMix in korrespondierende Getriebeausgangsmomente umgerechnet. Einer Maximalwertauswahl 2103 werden das Fahrerwunschmoment MFW und der aus dem Sollbeschleunigungswert aVRegMix des Reglers abgeleitete Sollwert zugeführt. Der größte der beiden Wert wird in der Maximalwertauswahl ausgewählt. Dadurch wird ein Überreiten des Fahrgeschwindigkeitsreglers durch den Fahrerwunsch möglich.

Das Ergebnis der Maximalwertauswahl wird einer Minimalwertauswahl 2104 zugeführt, der ferner ein aus der begrenzten Vorgabegröße aVLimMix des Begrenzers abgeleiteter Sollwert zugeführt wird. Der kleinste der beiden Werte bildet den Vortriebswunsch MPT. Auf diese Weise wird eine Begrenzung des Fahrgeschwindigkeitsreglers und des Fahrerwunsches durch den Begrenzer ermöglicht.

Der Verzögerungswunsch aBr wird durch die Minimalwertauswahl 2105 aus den Beschleunigungssollwerten des Reglers und des Begrenzers gebildet. Dabei ist ferner ein Schaltelement mit Hysterese 2106 vorgesehen. Ist der ermittelte Wert für aBr größer als ein Grenzwert, wird das Gültigkeitssignal B_BrEn gesetzt, bei Unterschreiten eine weiteren, kleineren Grenzwertes zurückgesetzt. Dabei wird als (oberer) Grenzwert die Verzögerung vorgegeben, die durch das Schleppmoment des Triebstrangs verursacht wird.

## Patentansprüche

1. Verfahren zur Steuerung der Fahrgeschwindigkeit eines Fahrzeugs, wobei Vorgabegrößen (aVLimSoll; aVRegSoll) von wenigstens zwei Funktionen (200, 202) zur Beeinflussung der Fahrzeuggeschwindigkeit erzeugt werden, wobei die Vorgabegrößen (aVLimSoll; aVRegSoll) der wenigstens zwei Funktionen (200, 202) sowie Basisgrößen (aBaseMax; aBaseMin) für die wenigstens zwei Funktionen (200, 202) einem Mixer (204) für die Geschwindigkeitsbegrenzungsfunktion (200) sowie einem Mixer (206) für die Geschwindigkeitsregelfunktion (202) zugeführt werden, wobei jedem Mixer (204, 206) die jeweilige Vorgabegröße (aVLimSoll, aVRegSoll) zugeführt wird, wobei die Mixer (204, 206) die Vorgabegrößen (aVLimSoll; aVRegSoll) in Abhängigkeit der zugeführten Basisgrößen (aBaseMax; aBaseMin) begrenzen, und wobei die in den Mixern (204, 206) begrenzten Vorgabegrößen (aVLimMix; aVRegMix) an eine Verteilereinrichtung (210) weitergeleitet werden, in der eine Auswahl aus den begrenzten Vorgabegrößen (aVLimMix; aVRegMix) vorgenommen wird und ein oder mehrere Vortriebssollwerte (aSoll; MSoll) gebildet werden, der/die an die entsprechende Steuerungsfunktion für Motor, Bremse, und/oder Getriebe abgegeben wird werden,**dadurch gekennzeichnet, dass** die Basisgrößen (aBaseMax; aBaseMin) den Mixern (204, 206) sowie der Geschwindigkeitsregelfunktion (202) und der Geschwindigkeitsbegrenzungsfunktion (200) zugeführten werden.

2. Verfahren nach Anspruch 1, **dadurch gekennzeichnet, dass** die Vorgabegrößen Beschleunigungsgrößen sind, die Basisgrößen Beschleunigungsbasisgrößen.

3. Verfahren nach Anspruch 1, **dadurch gekennzeichnet, dass** die Vorgabegröße der Geschwindigkeitsbegrenzungsfunktion bei Überschreiten eines vom Basiswert abhängigen Grenzwertes auf diesen Grenzwert begrenzt wird.

4. Verfahren nach einem der vorhergehenden Ansprüche, **dadurch gekennzeichnet, dass** die Vorgabegröße der Geschwindigkeitsregelfunktion auf einen Grenzwert begrenzt wird, der aus dem Basiswert abgeleitet ist.

5. Verfahren nach Anspruch 4, **dadurch gekennzeichnet, dass** die Maximalbegrenzung der Vorgabegröße der Geschwindigkeitsregelfunktion der Basisgröße entspricht, wenn ein aktiver Eingriff der Geschwindigkeitsbegrenzung vorliegt.

6. Verfahren nach einem der vorhergehenden Ansprüche, **dadurch gekennzeichnet, dass** ein erster Basiswert einen Wert angibt, bei dessen Überschreitung eine Beschleunigung des Fahrzeugs stattfindet, ein zweiter Basiswert vorgegeben wird, dessen Unterschreiten eine Verzögerung des Fahrzeugs ermöglicht.

7. Verfahren nach einem der vorhergehenden Ansprüche, **dadurch gekennzeichnet, dass** die gegebenenfalls begrenzten Vorgabegrößen zu einer resultierenden Vorgabegröße verbunden werden, in deren Abhängigkeit wenigstens ein Stellglied betätigt wird.

8. Vorrichtung zur Steuerung der Geschwindigkeit eines Fahrzeugs, mit wenigstens zwei, die Geschwindigkeit des Fahrzeugs beeinflussenden Funktionen (200, 202), wobei für die wenigstens zwei Funktionen (200, 202) jeweils ein Mixer (204, 206) vorgesehen ist, dem jeweils die Vorgabegrößen (aVLimSoll; aVReg Soll) der wenigstens zwei Funktionen (200, 202) sowie Basisgrößen (aBaseMax; aBaseMin) zugeführt werden, wobei der jeweils eine Mixer die Vorgabegrößen (aVLimSoll; aVRegSoll) in Abhängigkeit der zugeführten Basisgrößen (aBaseMax; aBaseMin) begrenzt, wobei eine Verteilereinrichtung (210) vorgesehen ist, der die von den Mixern (204, 206) begrenzten Vorgabegrößen (aVLimMix; aVRegMix) zugeführt werden, und wobei die Verteilereinrichtung (210) eine Auswahl aus den begrenzten Vorgabegrößen (aVLimMix; aVRegMix) vornimmt und einen oder mehrere Vortriebssollwerte (asoll; MSoll) bildet, der/die an die entsprechende Steuerungsfunktion für Motor, Bremse, und/oder Getriebe abgegeben wird/werden, **dadurch gekennzeichnet, dass** die Vorrichtung derart ausgebildet ist, daß die Basisgrößen (aBaseMax; aBaseMin) den Mixern (204, 206) sowie der Geschwindigkeitsregelfunktion (202) und der Geschwindigkeitsbegrenzungsfunktion (200) zugeführten werden.

## Claims

1. Method for controlling the velocity of a vehicle, wherein predefined variables (aVLimSoll; aVRegSoll) of at least two functions (200, 202) are generated in order to influence the velocity of the vehicle, wherein the predefined variables (aVLimSoll; aVRegSoll) of the at least two functions (200, 202) as well as basic variables (aBaseMax; aBaseMin) for the at least two functions (200, 202) are fed to a mixer (204) for the velocity-limiting function (200) and to a mixer (206) for the velocity-controlling function (202), wherein the respective predefined variable (aVLimSoll; aVRegSoll) is fed to each mixer (204, 206), wherein the mixers (204, 206) limit the predefined variables (aVLimSoll; aVRegSoll) as a function of the supplied basic variables (aBaseMax; aBaseMin), and wherein the predefined variables (aVLimMix; aVRegMix) which are limited in the mixers (204, 206) are passed on to a distributor device (210) in which a selection is made from the limited predefined variables (aVLimMix; aVRegMix), and one or more propulsion setpoint values (aSoll; MSoll) which is/are output to the corresponding control function for the engine, brake and/or gearbox are formed, **characterized in that** the basic variables (aBaseMax; aBaseMin) are fed to the mixers (204, 206) and to the speed control function (202) and the speed-limiting function (200).

2. Method according to Claim 1, **characterized in that** the predefined variables are acceleration variables and the basic variables are acceleration basic variables.

3. Method according to Claim 1, **characterized in that** the predefined variable of the speed-limiting function is limited to this limiting value when a limiting value which is dependent on the basic value is exceeded.

4. Method according to one of the preceding claims, **characterized in that** the predefined variable of the speed-controlling function is limited to a limiting value which is derived from the basic value.

5. Method according to Claim 4, **characterized in that** the maximum limitation of the predefined variable of the velocity-controlling function corresponds to the basic variable when an active intervention by the speed-limiting system occurs.

6. Method according to one of the preceding claims, **characterized in that** a first basic value specifies a value at whose transgression the vehicle accelerates, and a second basic value is predefined whose downward transgression permits deceleration of the vehicle.

7. Method according to one of the preceding claims, **characterized in that** the predefined variables, which are limited if appropriate, are connected to form a resulting predefined variable as a function of which at least one actuator element is activated.

8. Device for controlling the velocity of a vehicle, having at least two functions (200, 202) which influence the velocity of the vehicle, wherein a mixer (204, 206) is provided for each of the at least two functions (200, 202), to which mixers (204, 206) the predefined variables (aVLimSoll; aVRegsoll) of the at least two functions (200, 202) as well as basic variables (aBaseMax; aBaseMin) are respectively fed, and wherein the respective one mixer limits the predefined variables (aVLimSoll; aVRegsoll) as a function of the supplied basic variables (aBaseMax; aBaseMin), wherein a distributor device (210) to which the predefined variables (aVLimMix; aVRegMix) which are limited by the mixers (204, 206) are fed is provided, and wherein the distributor device (210) makes a selection from the limited predefined variables (aVLimMix; aVRegMix) and forms one or more propulsion setpoint values (asoll; MSoll) which is/are output to the corresponding control function for the engine, brake and/or gearbox, **characterized in that** the device is embodied in such a way that the basic variables (aBaseMax; aBaseMin) are fed to the mixers (204, 206) and to the velocity-controlling function (202) and to the velocity-limiting function (200).

## Revendications

1. Procédé de commande de la vitesse de déplacement d'un véhicule, dans lequel des grandeurs de consigne (aVLimSoll ; aVRegSoll) d'au moins deux fonctions (200, 202) sont formées pour agir sur la vitesse du véhicule,
les grandeurs de consigne (aVLimSoll ; aVRegSoll) des deux ou plusieurs fonctions (200, 202) ainsi que des grandeurs de base (aBaseMax ; aBaseMin) des deux ou plusieurs fonctions (200, 202) étant apportées à un mélangeur (204) prévu pour la fonction (200) de limitation de vitesse ainsi qu'à un mélangeur (206) prévu pour la fonction (202) de régulation de vitesse,
la grandeur de consigne respective (aVLimSoll ; aVRegSoll) étant apportée à chaque mélangeur (204, 206),
les mélangeurs (204, 206) limitant les grandeurs de consigne (aVLimSoll ; aVRegSoll) en fonction des grandeurs de base (aBaseMax ; aBaseMin) apportées et
les grandeurs de consigne (aVLimMix ; aVRegMix) limitées dans les mélangeurs (204, 206) étant transmises à un dispositif de répartition (210) dans lequel une sélection des grandeurs de consigne limitées (aVLimMix ; aVRegMix) est entreprise et une ou plusieurs grandeurs de consigne avant (aSoll ; MSoll) sont formées et sont délivrées à la fonction de commande respective du moteur, des freins et/ou de la transmission,
**caractérisé en ce que**
les grandeurs de base (aBaseMax ; aBaseMin) sont apportées aux mélangeurs (204, 206), de même que la fonction (202) de régulation de vitesse et que la fonction (200) de régulation de vitesse.

2. Procédé selon la revendication 1, **caractérisé en ce que** les grandeurs de consigne sont des grandeurs d'accélération et les grandeurs de base des grandeurs de base d'accélération.

3. Procédé selon la revendication 1, **caractérisé en ce qu'**en cas de dépassement d'une valeur limite qui dépend de la valeur de base, la grandeur de consigne de la fonction de limitation de vitesse est limitée à cette valeur limite.

4. Procédé selon l'une des revendications précédentes, **caractérisé en ce que** la valeur de consigne de la fonction de régulation de vitesse est limitée à une valeur limite qui est dérivée de la valeur de base.

5. Procédé selon la revendication 4, **caractérisé en ce que** la limitation maximale de la grandeur de consigne de la fonction de régulation de vitesse correspond à la grandeur de base lorsqu'une intervention active est entreprise sur la limitation de vitesse.

6. Procédé selon l'une des revendications précédentes, **caractérisé en ce qu'**une première valeur de base indique une valeur qui, si elle est dépassée, correspond à une accélération du véhicule, et **en ce qu'**une deuxième valeur de base dont le dépassement permet un ralentissement du véhicule est prédéterminée.

7. Procédé selon l'une des revendications précédentes, **caractérisé en ce que** les grandeurs de consigne éventuellement limitées sont rassemblées en une grandeur de consigne résultante en fonction de laquelle au moins un organe de réglage est actionné.

8. Dispositif de commande de la vitesse d'un véhicule, qui présente :
au moins deux fonctions (200, 202) qui agissent sur la vitesse du véhicule,
un mélangeur (204, 206) étant prévu pour chacune des deux ou plusieurs fonctions (200, 202),
les grandeurs de consigne (aVLimSoll ; aVRegSoll) des deux ou plusieurs fonctions (200, 202) ainsi que des grandeurs de base (aBaseMax ; aBaseMin) étant apportées aux mélangeurs,
chaque mélangeur limitant les grandeurs de consigne (aVLimSoll ; aVRegSoll) respectives en fonction des grandeurs de base (aBaseMax ; aBaseMin) qui lui sont apportées,
un dispositif de répartition (210) auquel les grandeurs de consigne (aVLimMix ; aVRegMix) limitées par les mélangeurs (204, 206) sont apportées étant prévu, et
le dispositif de répartition (210) effectuant une sélection des grandeurs de consigne limitées (aVLimMix ; aVRegMix) et formant une ou plusieurs valeurs de consigne avant (aSoll ; MSoll) qui sont délivrées à la fonction de commande correspondante du moteur, des freins et/ou de la transmission,
**caractérisé en ce que**
le dispositif est configuré de telle sorte que les grandeurs de base (aBaseMax ; aBaseMin) sont apportées aux mélangeurs (204, 206) ainsi qu'à la fonction (202) de régulation de vitesse et qu'à la fonction (200) de limitation de vitesse.
